**Europäisches Patentamt**

**European Patent Office**

**Office européen des brevets**

(19)

(11) **EP 1 312 546 A1**

(12) # DEMANDE DE BREVET EUROPEEN

(43) Date de publication:
**21.05.2003 Bulletin 2003/21**

(51) Int Cl.⁷: $B64G\ 1/00$, $G21K\ 1/00$

(21) Numéro de dépôt: **01402932.6**

(22) Date de dépôt: **14.11.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(71) Demandeur: **De France, Stéphane**
**82300 Caussade (FR)**

(72) Inventeur: **De France, Stéphane**
**82300 Caussade (FR)**

(54) **Procédé d'induction d'une divergence entre temps central et temps périphérique d'un système en rotation applicable à un engin spatial**

(57) L'invention concerne un procédé fondé sur une hypothèse relativiste de rotation temporelle associée à une rotation spatiale rapide, dans un cadre quintidimensionnel où le temps est représenté par deux dimensions. Le procédé est mis en oeuvre au moyen d'un système de couches concentriques comportant: un habitacle central S1 non entraîné dans la rotation, une première couche concentrique C2 limitée à l'intérieur par une paroi S2 immobile par rapport à l'habitacle, cette couche C2 contenant les dispositifs moteurs appropriés, l'un pouvant être constitué par exemple de générateurs G de champ électrique et magnétique produisant la rotation rapide d'un flux ou d'un réseau de particules chargées périphériques occupant la couche C3, une couche C4 contenant les dispositifs complémentaires de la couche C2 pour l'application des champs électrique et magnétique à la couche C3, puis une paroi S5 éventuellement complétée par un ou plusieurs fils en rotation rapide. Le calcul montre qu'une fois atteinte une vitesse de rotation suffisante, l'écoulement du temps au centre d'un tel système peut être notablement ralenti.

Un véhicule spatial aménagé selon l'invention, et muni par ailleurs de tout moyen de propulsion classique, pourra ainsi parcourir des distances importantes avec un moindre vieillissement des produits transportés.

FIG. 3

EP 1 312 546 A1

**Description**

La présente invention concerne un procédé pouvant être appliqué à un véhicule spatial pour induire une divergence entre l'orientation de la durée pour le contenu et pour le véhicule porteur, ce sans contradiction avec l'existence d'une vitesse limite. Le procédé selon l'invention permet également de diminuer la détectabilité de l'engin qui en est muni. En effet, représentons le temps sur deux axes, soit O t et O tau, et supposons un observateur terrestre évoluant suivant l'axe temporel O t, de même que le véhicule avant rotation. Appliquons au véhicule le procédé selon l'invention, et supposons le système parfaitement performant, permettant d'atteindre une divergence temporelle de 90 degrés entre le centre et la périphérie.

L'enveloppe externe en rotation se trouve alors orientée dans le temps selon l'axe O tau, donc dans le présent par rapport à l'observateur extérieur, et le déplacement spatial quel qu'il soit, se déroulant dans le présent de l'observateur orienté selon O t, n'a pour lui aucune durée. Il est donc indétectable. Le contenu du véhicule, qui n'a pas subi la rotation rapide, puisqu'il est au centre, reste orienté selon O t, donc demeure à la date du départ, sans évoluer. Lorsque le déplacement spatial souhaité est atteint, la rotation cesse, l'orientation temporelle redevient celle de Ot, le véhicule est à nouveau visible, mais en un lieu différent du lieu de départ. Mais en pratique, on ne pourra atteindre une rotation temporelle de 90 degrés, et le déplacement spatial demeurera détectable.

Pour réaliser le calcul sur lequel s'appuie le procédé selon l'invention, nous avons étendu les méthodes usuelles en Relativité Générale au cas de cinq dimensions, sans recours à la simplification de la symétrie sphérique, en raison de la rotation, mais en conservant les simplifications d'un champ de gravitation faible et d'un déplacement lent du centre de masse du véhicule. Nous nous sommes situés dans le cas dit intérieur, et nous avons calculé la valeur de l'élément de métrique au centre du système et à l'extérieur. La valeur de la métrique au centre répond à la relation suivante:

$$ds^2 = (-1 -12Gm / c^2L) \Sigma dx_i^2 + (4Gm\omega^2 L /c^4) dz^2 + [1- (4Gm/c^2L)( \omega^2L^2/c^2$$

$$-3(\sin^2\theta' - \cos^2\theta'))]c^2 dt^2 + [1-(4Gm /c^2 L)( \omega^2 L^2/c^2 -3( \cos^2\theta' - \sin^2 \theta'))] c^2 d\tau^2$$

$$- (48Gm/ c^2L) \sin \theta'\cos \theta' c^2 dt d\tau$$

où l'indice i prend les valeurs 1 à 3 et les $dx_i$ représentent dx, dy dz,
$\omega$ représente la pulsation, L le rayon de la sphère externe, m la masse du système, G la constante de la gravitation, $\theta$ et $\theta'$ les rotations temporelles pour le centre et pour la périphérie.

Dans cette approximation, si la vitesse de rotation pouvait atteindre celle de la lumière, pour une déviation temporelle nulle au centre, on aurait au mieux une déviation temporelle de 54,7 degrés à la périphérie, et le temps divergerait de 54,7 degrés par rapport à l'observateur. Un déplacement de un an pour le véhicule durerait encore environ sept mois pour le contenu placé au centre.

Maintenant considérons un point P situé à l'extérieur de la sphère,à une distance r du centre C suffisante pour qu'elle puisse être confondue (selon la précision souhaitée pour le calcul) avec la distance R de P à un point quelconque de la sphère. La métrique devient:

$$ds^2=(-1-8Gm/c^2r)\Sigma dx_i^2 +(16 Gm \omega^2 L^2 / 5 c^4 r) dz^2 +[1-(8Gm/c^2r)(\cos^2\theta'- \sin^2\theta'$$

$$+2\omega^2L^2/c^2)]c^2dt^2 +[1-(8Gm/c^2r)(\sin^2\theta'-\cos^2\theta'+2\omega^2L^2/c^2)]c^2d\tau^2-(32Gm/c^2r)\sin \theta'\cos\theta' dt d\tau$$

Pour que le système en rotation rapide n'induise pas de déviation temporelle à distance, même si la déviation à la périphérie du système atteint pi sur deux, alors la pulsation ne peut être supérieure à:

$$\omega = c/L \sqrt{2}$$

Ce calcul approché montre qu'il est possible par exemple d'éviter une perturbation temporelle à la surface de la terre lors du démarrage d'un engin appliquant le procédé selon l'invention, pourvu qu'il soit suffisamment éloigné lorsqu'il atteint une vitesse de rotation critique.

En appliquant cette vitesse à la valeur de la métrique au centre, on constate qu'il est possible d'obtenir une déviation temporelle périphérique de quatre vingt dix degrés, donc un véhicule indétectable, mais avec une notable déviation temporelle au centre, puisqu'elle atteint quarante degrés dans cette approximation. On peut y voir un intérêt, pourvu que le contenu n'en soit pas altéré. Mais une autre considération, rapprochant l'attraction gravitationnelle et l'orientation du temps vers le futur, permet de penser que si la divergence atteint quatre vingt dix degrés, il se produira une inversion du signe de la masse avec un effet de répulsion gravitationnelle.

Jusqu'à présent, les voyages spatiaux sont limités à l'exploration de cibles proches, en raison de la durée des trajets, trop longue pour les vols habités , donc ne permettant que l'envoi de robots. D'où l'intérêt du procédé proposé ici.

Description du système proposé ici pour appliquer le procédé selon l'invention: Le système comporte cinq sphères concentriques emboitées, S1 au centre, puis S2, S3, S4, S5, séparées par les couches C1 entre S1 et S2, puis C2 ,C3, et C4 entre S4 et S5. La partie conteneur, ou habitacle, S1, est maintenue au centre du système par tout moyen, tel que sustentation magnétique par un champ issu de la couche C1, et n'est pas entraînée dans la rotation périphérique. La couche C2 contient tous moyens de propulsion classique P et les générateurs de champ électrique et magnétique pouvant fournir d'une part le champ produisant la sustentation de S1, et d'autre part le champ électrique accélérateur et le champ magnétique permettant la rotation rapide d'un matériau approprié, qui peut être un nuage de particules chargées, accupant la couche C3 située entre S3 et S4; la couche C4 contient les dispositifs moteurs complémentaires de ceux situés en C2. Un ou plusieurs fils en rotation rapide, ou tout matériau approprié, forment la limite externe S5.

Selon les matériaux et la vitesse de rotation qu'ils subiront, il pourra se produire des déformations variables dont il n'a pas été tenu compte dans le calcul.

Les déformations en ellipsoïde ou en disque des parties périphériques en rotation restent compatibles avec le principe et les propos de l'invention, à savoir l'exploitation d'un effet de déviation temporelle associé à la rotation spatiale. Les déformations peuvent être corrigées si l'axe de rotation est variable, par exemple animé lui-même d'un second mouvement de rotation pourvu que son axe passe toujours par le centre C.

L'effet de déviation temporelle doit être aussi faible que possible dans l'habitacle S1, et aussi grand que possible entre S3 et S5. Il est alors également présent à l'extérieur et au voisinage de l'engin. Il y a donc avantage à n'utiliser le système de rotation rapide qu'une fois l'appareil suffisamment éloigné de tout objet auquel une perturbation temporelle pourrait nuire. La rotation rapide nécessaire au système peut être produite par tout dispositif et par exemple au moyen d'un champ électrique accélérateur produit par une tension alternative et d'un champ magnétique imprimant aux particules chargées une trajectoire circulaire centrée sur l'axe de ce champ magnétique.

Les particules chargées peuvent être des électrons, des deutons, ou tous autres ions que l'état de la technique permette d'utiliser. Ces particules peuvent former un tissu, un réseau, un plasma, ou tout autre combinaison pouvant supporter une vitesse de rotation subluminale.

De même la partie limitante externe S5 peut être constituée d'un ou plusieurs fils en rotation rapide ou de tout autre matériau approprié.

Les dessins annexés illustrent l'invention:

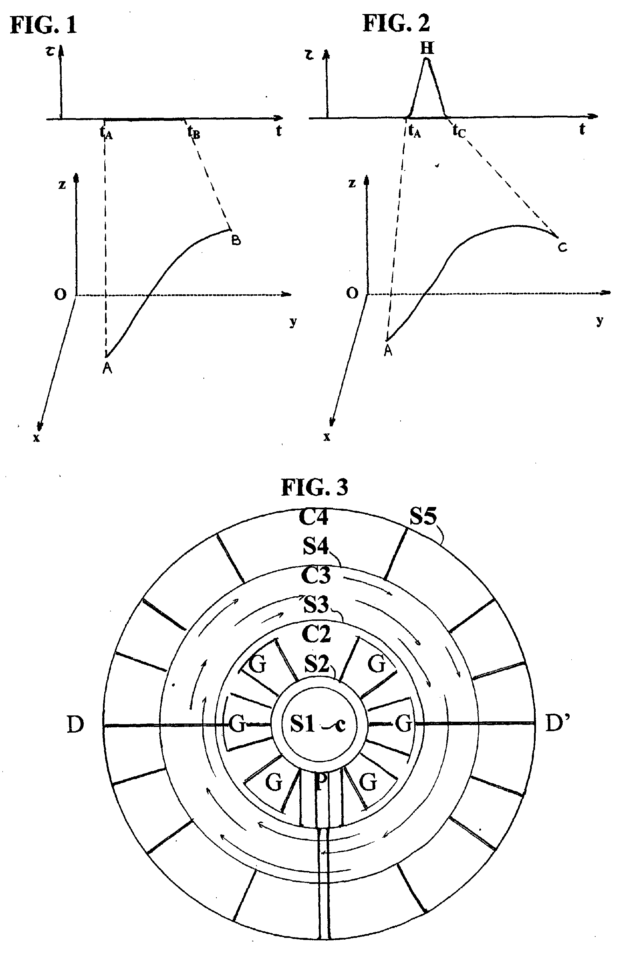

La figure 1 représente une trajectoire spatiale AB et sa trace $t_A$ $t_B$ dans le plan temporel au cours d'un déplacement classique du véhicule de A en B; la figure 2 représente un déplacement spatial AC en appliquant le procédé selon l'invention: la durée du trajet pour le centre du véhicule est seulement $t_A$ $t_C$ comme pour un observateur externe, alors que

la trace temporelle du véhicule porteur est $t_A$ H $t_C$. La figure 3 représente une coupe du système passant par le centre C, montrant l'habitacle S1 et les couches concentriques C1, C2, C3, C4,séparées par les parois sphériques S2, S3 S4 et S5 au repos. Les dispositifs générateurs des champs électrique et magnétique nécessaires à la sustentation de l'habitacle S1 et à la rotation de la couche C4 sont situés en G dans la couche interne C2 et dans la couche externe C4. On peut également placer en C2 tout dispositif P de propulsion classique. Sur la figure 3, l'axe de rotation passant par C est perpendiculaire au plan de la coupe. On a représenté en DD' un second axe de rotation, dans le cas de la mise en jeu d'un mouvement additionnel limitant les déformations.

## Revendications

**1.** Procédé pour diminuer la durée relative du transport d'un contenu par rapport à la durée du déplacement de l'engin conteneur, au moyen d'un système **caractérisé en ce qu'**il comporte un volume C3 qui peut être compris entre deux sphères, occupé par une matière en rotation assez rapide pour être associée à une déviation temporelle utilisable ', et un volume qui peut être sphérique S1 situé au centre du système, non ou peu affecté par la rotation, et destiné à recevoir le contenu transporté.

**2.** Procédé selon la revendication 1 **caractérisé en ce que** le volume S1 est maintenu au centre d'une sphère S2 qui exerce à la surface de S1 une force également répartie, par exemple magnétique, permettant la sustentation.

**3.** Procédé selon la revendication 1 ou la revendication 2 **caractérisé en ce qu'**il existe deux couches C2 et C4 pouvant contenir les dispositifs sources des champs électrique et magnétique nécessaires à la sustentation de S1 et la rotation de C3, les moteurs nécessaires à la rotation de fils en S5 ainsi que tout dispositif de propulsion classique.

4. Procédé selon l'une quelconque des revendications précédentes et **caractérisé en ce que** le volume C3 peut contenir des particules chargées, électrons, deutons ou autres ions ou tout autre élément approprié susceptible d'entrer en rotation rapide, par exemple sous l'effet combiné d'un champ électrique accélérateur et d'un champ magnétique dont la source peut être dans les couches C2 et C4.

5. Procédé selon l'une quelconque des revendications précédentes et **caractérisé en ce qu'**un ou plusieurs fils en rotation rapide situés le long de la paroi S5 peuvent constituer la limite externe du système.

6. Procédé selon l'une quelconque des revendications précédentes et **caractérisé en ce que** l'axe de rotation peut lui-même subir un mouvement tel qu'une rotation secondaire orthogonale à la première de manière à corriger d'éventuelles déformations des parties mobiles.

**FIG. 1**

**FIG. 2**

**FIG. 3**

Office européen **RAPPORT DE RECHERCHE EUROPEENNE** Numéro de la demande

des brevets EP 01 40 2932

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | PAURI M ET AL: "Marzke-Wheeler coordinates for accelerated observers in special relativity"<br>FOUNDATIONS OF PHYSICS LETTERS, OCT. 2000, PLENUM, USA,<br>vol. 13, no. 5, pages 401-425,<br>XP008003401<br>ISSN: 0894-9875<br>* page 407, dernier alinéa - page 414, alinéa 1 *<br>* page 418, dernier alinéa - page 420, dernier alinéa *<br>* page 421, dernier alinéa - page 423, dernier alinéa *<br>--- | 1 | B64G1/00<br>G21K1/00 |
| A | BAYIN S S: "Slowly rotating fluid spheres in general relativity"<br>PHYSICAL REVIEW D (PARTICLES AND FIELDS),<br>15 JUNE 1983, USA,<br>vol. 27, no. 12, pages 3030-3031,<br>XP002199872<br>ISSN: 0556-2821<br>* le document en entier *<br>--- | 1 | |
| A | MCLEOD T S: "The implications of time dilation measurements on special relativity theory"<br>PHYSICS ESSAYS, JUNE 1998, PHYSICS ESSAYS PUBLICATIONS, CANADA,<br>vol. 11, no. 2, pages 187-193,<br>XP008003399<br>ISSN: 0836-1398<br>* page 189, alinéa 5 - alinéa 7 *<br>---<br><br>-/-- | 1 | DOMAINES TECHNIQUES RECHERCHES (Int.Cl.7)<br><br>B64G<br>G21K |

Le présent rapport a été établi pour toutes les revendications

| Lieu de la recherche | Date d'achèvement de la recherche | Examinateur |
|---|---|---|
| LA HAYE | 24 mai 2002 | Capostagno, E |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

Office européen
des brevets

**RAPPORT DE RECHERCHE EUROPEENNE**

Numéro de la demande

EP 01 40 2932

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | YAHALOMI E M: "Measurement of the time dilation in rotational movements" FOUNDATIONS OF PHYSICS LETTERS, OCT. 1997, PLENUM, USA, vol. 10, no. 5, pages 495-501, XP008003402 ISSN: 0894-9875 ----- | | |

DOMAINES TECHNIQUES RECHERCHES (Int.Cl.7)

Le présent rapport a été établi pour toutes les revendications

| Lieu de la recherche | Date d'achèvement de la recherche | Examinateur |
|---|---|---|
| LA HAYE | 24 mai 2002 | Capostagno, E |